(19) **Europäisches Patentamt / European Patent Office / Office européen des brevets**

(11) **EP 3 792 012 B1**

(12) **EUROPEAN PATENT SPECIFICATION**

| | |
|---|---|
| (45) Date of publication and mention of the grant of the patent:<br>**27.12.2023 Bulletin 2023/52** | (51) International Patent Classification (IPC):<br>**B25J 9/16** *(2006.01)* |
| (21) Application number: **19196855.1** | (52) Cooperative Patent Classification (CPC):<br>**B25J 9/1692; B25J 9/1697;** G05B 2219/39008 |
| (22) Date of filing: **12.09.2019** | |

(54) **METHOD AND CONTROL UNIT FOR OPERATING A ROTATING HEAD SYSTEM WITH MULTIPLE CAMERAS**

VERFAHREN UND STEUEREINHEIT ZUM BETREIBEN EINES ROTIERENDEN KOPFSYSTEMS MIT MEHREREN KAMERAS

PROCÉDÉ ET UNITÉ DE COMMANDE POUR FAIRE FONCTIONNER UN SYSTÈME DE TÊTE ROTATIVE AVEC PLUSIEURS CAMÉRAS

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (72) Inventor: **Park, Chulhun**<br>**Greer, SC 29651 (US)** |
| (43) Date of publication of application:<br>**17.03.2021 Bulletin 2021/11** | (56) References cited:<br>**EP-A2- 1 345 099**    **US-A1- 2005 273 202**<br>**US-A1- 2019 047 151**    **US-A1- 2019 084 160** |
| (73) Proprietor: **Bayerische Motoren Werke Aktiengesellschaft**<br>**80809 München (DE)** | |

**Description**

The present document is directed at the control of a rotating head system, such as a stud welding device.

Vehicles, notably cars, are typically manufactured within an assembly line using one or more rotating head systems. A rotating head system may e.g. be configured to weld one or more studs onto the body of a vehicle. An erroneous positioning of the head of the rotating head system relative to the body of the vehicle (e.g. subsequent to maintenance of the rotating head system) may lead to a collision between the rotating head system and the vehicle body and/or may lead to a wrong placement of the one or more studs on the vehicle body.

US 2019/084160 A1 describes a method for calibrating a machine vision system and a robot. US 2005/273202 A1 describes a method for increasing the positioning accuracy of a manipulator. EP 1 345 099 A2 describes a method for determining the pose of an object. US 2019/047151 A1 describes a method for calibrating a robot arm.

The present document is directed at the technical problem of enabling an efficient and precise positioning of the head of a rotating head system relative to the body of a product, notably to a vehicle body, that is manufactured using the rotating head system.

The invention is defined in the appended claims.

According to an aspect a method for operating a rotating head system is described.

The rotating head system comprises a head which is configured to be rotated around a rotation point. The head may be used to perform a welding process during assembly of a product (notably a vehicle). In particular, the head may be configured to weld one or more studs onto the body of a product. This process may be repeated for a sequence of products within an assembly line. The method may be directed at calibrating the rotating head system (e.g. subsequent to maintenance of the rotating head system), such that the rotating head system is aware of the pose of the head of the rotating head system relative to the one or more products on the assembly line.

The method comprises (during a calibration phase) rotating the head (around the rotation point) into $K$ different orientations to face $K$ different cameras, respectively, with $K > 3$ (wherein $K$ is an integer). Each camera is configured to capture an image of the front face of the head. The front face of the head may comprise one or more tools (e.g. for welding and/or for grabbing), which may be used as a reference point of the front face of the head. In particular, the head may comprise a grabbing device for grabbing a stud, and the reference point may be located on the grabbing device.

The $K$ cameras are arranged at $K$ different angles around the rotation point of the head, wherein the $K$ different angles may span an angular range of 45° or more, or 90° or more. By placing cameras at $K$ different angles which span a relatively large angular range, the offset of the actual pose of the head relative to the target pose of the head may be determined in a particularly precise manner.

The method further comprises capturing $K$ images using the $K$ different cameras, respectively. The $K$ (two-dimensional) images may be determined sequentially as the head is turned towards the $K$ different cameras. In particular, a first image may be captured when the head is facing a first camera, a second image may be captured when the head is facing the second camera, and so on, until capturing a $K^{th}$ image when the head is facing the $K^{th}$ camera.

The reference point of the (front face of the) head may exhibit a target position within each one of the $K$ images, if the head (or the rotation point of the head) exhibits the target pose. The $K$ different cameras may be positioned around the rotation point such that an offset of the actual pose of the head (or the rotation point) from the target pose leads to a deviation of the reference point of the head from the target position within at least one of the $K$ images.

The method comprises determining $K$ deviations (i.e. deviation values or deviation vectors) of the reference point of the head from the target position within the $K$ images, respectively. The deviation may be zero, if the reference point is located at the target position.

Furthermore, the method comprises determining an offset of the head from the target pose based on the $K$ deviations using a transformation matrix, wherein the transformation matrix may comprise a Jacobian matrix or an estimate of an inverse of a Jacobian matrix. As indicated above, the offset may be indicative of a translational offset and/or of a rotational offset from the target pose. Hence, the offset may be a 3- or a 6-dimensional vector.

The offset may be provided as the outcome of the calibration phase of the rotating head system. The offset is e used during operation of the rotating head system. In particular, the method comprises operating the head in dependence of the offset, wherein operating the head may comprise welding one or more studs to a product using the head of the rotating head system. By taking into account the offset during operation of the rotating head system, a precise and collision-free operation of the rotating head system may be ensured.

The transformation matrix may be dependent on the $K$ different orientations and/or angles of the cameras. Alternatively, or in addition, the transformation matrix may be dependent on positions of the $K$ different cameras relative to the rotation point. As a result of this, the offset may be determined in a precise manner.

The method further comprises determining a deviation vector indicative of the $K$ deviations of the reference point of the head from the target position. The deviation vector comprises vector elements for each of the $K$ images. Furthermore, the method comprises multiplying the deviation vector with the transformation matrix to determine an offset vector, wherein the offset vector is indicative of the translational offset and/or the rotational offset of the actual pose of the head from the target pose. As a result of this, the offset is determined

in an efficient and precise manner.

The deviation of the reference point of the head from the target position within a particular image of the $K$ images may comprise a first deviation component along a first axis (e.g. the x-axis) of the particular image and a second deviation component along a second axis (e.g. the y-axis) of the particular image. The deviation vector may comprise as vector elements the first deviation components and the second deviation components for each of the $K$ deviations, i.e. for each one of the $K$ images, thereby allowing the offset to be determined in a precise manner.

As indicated above, the transformation matrix may be the inverse or an estimate of the inverse of a Jacobian matrix. The Jacobian matrix may comprise a row vector for each vector element of the deviation vector (i.e. for each deviation component). The row vector of the Jacobian matrix for the first deviation component along the first axis of the particular image may comprise the following vector elements

$$\frac{\partial}{\partial x} = \begin{bmatrix} 1 \\ 0 \\ 0 \end{bmatrix} \circ \begin{bmatrix} V_{1x} \\ V_{1y} \\ V_{1z} \end{bmatrix}, \frac{\partial}{\partial y} = \begin{bmatrix} 0 \\ 1 \\ 0 \end{bmatrix} \circ \begin{bmatrix} V_{1x} \\ V_{1y} \\ V_{1z} \end{bmatrix}, \frac{\partial}{\partial z} = \begin{bmatrix} 0 \\ 0 \\ 1 \end{bmatrix} \circ \begin{bmatrix} V_{1x} \\ V_{1y} \\ V_{1z} \end{bmatrix},$$

$$\frac{\partial}{\partial rx} = \left( \begin{bmatrix} 1 \\ 0 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \frac{\partial}{\partial ry} = \left( \begin{bmatrix} 0 \\ 1 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \frac{\partial}{\partial rz} = \left( \begin{bmatrix} 0 \\ 0 \\ 1 \end{bmatrix} \times \begin{bmatrix} x \\ y \\ z \end{bmatrix} \right) \circ \begin{bmatrix} V_{1x} \\ V_{1y} \\ V_{1z} \end{bmatrix},$$

wherein $\begin{bmatrix} V_{1x} \\ V_{1y} \\ V_{1z} \end{bmatrix}$ may be indicative of the orientation of the fist axis of the particular image, wherein $\begin{bmatrix} x \\ y \\ z \end{bmatrix}$ may be indicative of the position of the particular camera of the $K$ different cameras, which has taken the particular image; and wherein ° may be the projection operator. In a similar manner, each row vector of the Jacobian matrix may be determined for the different deviation components of the $K$ deviations. As can be seen, the Jacobian matrix may only depend on the orientation and the position of the cameras. Hence, the Jacobian matrix and the transformation matrix may be determined prior to execution of the method, thereby allowing the method to be executed in a resource efficient manner. According to a further aspect, a control unit for controlling a rotating head system which is configured to attach a part onto a body of a product using a head which is configured to be rotated around a rotation point is described. The control unit is configured to rotate the head into $K$ different orientations to face $K$ different cameras, respectively, with $K > 3$, and to capture $K$ images (regarding the front face of the head) using the $K$ different cameras, respectively. Furthermore, the control unit is configured to determine $K$ deviations of a reference point of the head from a target position within the $K$ images, respectively, and to determine an offset of the head from a target pose based on the $K$ deviations using a transformation matrix. In addition, the control unit may be configured to operate the head for attaching a part (notably a stud) onto a body of a product in dependence of the offset.

According to a further aspect, a rotating head system comprising the control unit which is described in the present document is described.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined.

The invention is explained below in an exemplary manner with reference to the accompanying drawings, wherein

Figure 1a shows an example body of a vehicle;
Figure 1b illustrates an example welding process using a rotating head system;
Figure 1c shows an example reference point on the front face of the head of a rotating head system;
Figure 2a shows an example arrangement of sensors (notably of cameras) around the head of a rotating head system;
Figure 2b illustrates the offset of the reference point of the head of a rotating head system from a target position; and
Figure 3 shows a flow chart of an example method for operating a rotating head system.

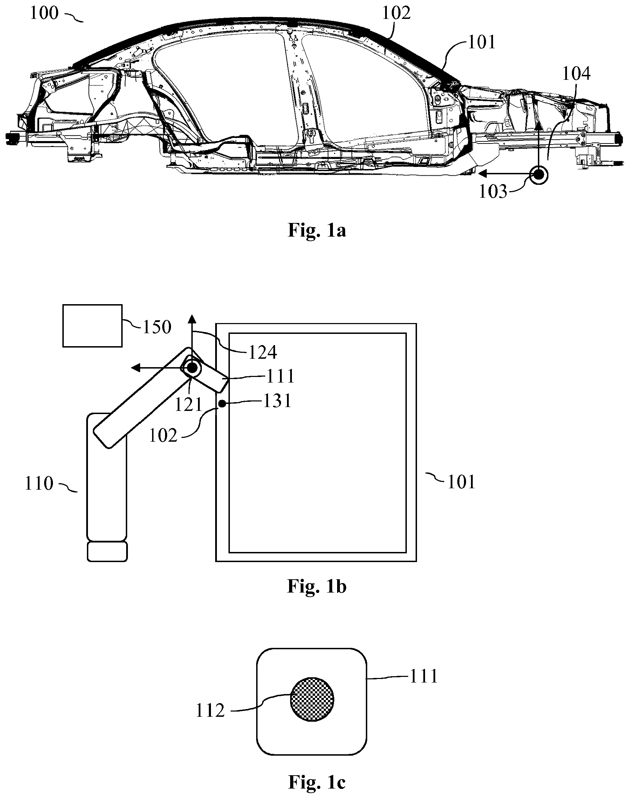

As outlined in the introductory section, the present document is directed at operating a rotating head system in a precise and reliable manner within a manufacturing process. In this context, Fig. 1a shows the body 101 of a vehicle 100, notably of a car, as an example for a general product which is assembled within an assembly line. Typically, an assembly line is used for assembling a sequence (e.g. thousands) of different vehicles 100 (which are at least partially identical to one another and/or which are of the same type).

Furthermore, Fig. 1a highlights a place 102 within the body 101, where one or more studs are to be fixed to the body 101 within the assembly line. In addition, Fig. 1a shows a vehicle coordinate system 104 which is positioned at a vehicle reference point 103. The vehicle reference point 103 may be the center of the front axis of the vehicle 100. The vehicle coordinate system 104 may comprise an x-axis (pointing from the front to the back of the vehicle 100), a y-axis (pointing from the left to the right of the vehicle 100) and a z-axis (pointing from the bottom to the top of the vehicle 100).

Fig 1b shows an excerpt of an assembly line. In particular, Fig. 1b illustrates a rotating head system 110 which comprises a head 111 that may be rotated around a rotation point 121. The head 111 may be configured to fix, notably to weld, one or more studs 131 onto the body 101 of the vehicle 100. The pose of the head 111 may be indicated within a head coordinate system 124 having its origin at the rotation point 121.

The head 111 of the rotating head system 110 may exhibit a reference point 112 at the front of the head 111 (as shown in Fig. 1c). The reference point 112 may e.g. correspond to a device for grabbing a stud 131.

In order to enable an exact placement of a stud 131 onto the body 101 and/or in order to avoid a collision between the head 111 and the body 101 during operation of the rotating head system 110, the head 111 and/or the rotating point 121 should exhibit a target pose (i.e. a target position and/or a target orientation) relative to the vehicle coordinate system 104, notably when fixing the stud 131 onto the body 101 of the vehicle 100. The method described in the present document may be directed at determining the pose of the head 111 or the rotation point 121 of the rotating head system 100 relative to the vehicle coordinate system 104.

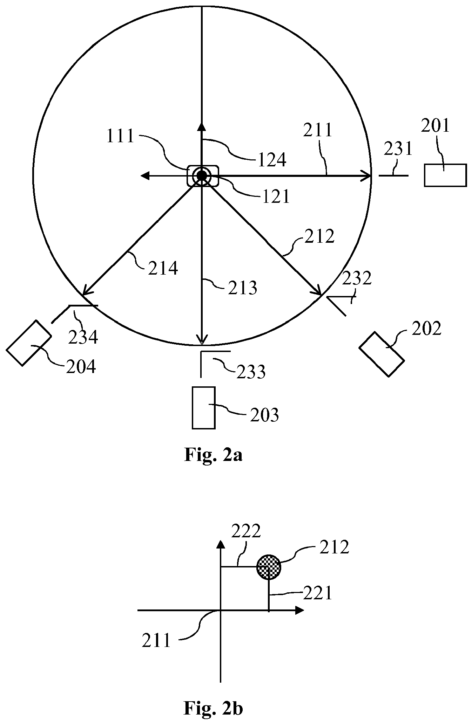

Fig. 2a illustrates a scheme and/or a system for determining the actual pose of the head 111 of the rotating head system 110. The offset between the actual pose and the target pose may be used to operate the rotating head system 100, in order to enable a precise and a collision-free operation of the head 111,

Fig. 2a shows the head 111 and a plurality of sensors 201, 202, 203, 204, notably a plurality of cameras, which are placed at different angles 231, 232, 233, 234 and/or orientations 211, 212, 213, 214 around the head 111 (i.e. around the rotation point 121). Example angles 231, 232, 233, 234 and/or orientations 211, 212, 213, 214 are 90°, 135°, 180°, and 225° (possibly offset by $\pm$90°). The head 111 may be turned sequentially to the different orientations 211, 212, 213, 214. The respective sensor 201, 202, 203, 204 may then capture sensor data (notably image data) regarding the reference point 112 of the head 111. Furthermore, the control unit 150 may be configured to determine, based on the respective sensor data, a deviation of the actual position of the reference point 112 from a target position of the reference point 112.

Fig. 2b shows an example image captured by a sensor 201, 202, 203, 204. The image shows the reference point 112 located at an actual position 212. Furthermore, Fig. 2b indicates the target position 211 for the reference point 112. The deviation between the actual position 212 and the target position 211 is given by a first deviation component 221 along a first axis and a second deviation component 222 along a second axis of the respective image.

When using $K$ measurements for $K$ different orientations 211, 212, 213, 214, K different (multi-dimensional) deviations between the actual position 212 and the target position 211 can be determined. The $K$ different deviations may be combined into a deviation vector [$DEV$]. The deviation vector [$DEV$] may be a $2K \times 1$ vector which comprises the deviation components 221, 222 for the $K$ different orientations 211, 212, 213, 214.

Using a Jacobian matrix J, the deviation vector [$DEV$] may be used to determine the actual pose of the head 111 and/or the rotation point 121 of the rotating head system 110 within the vehicle coordinate system 104. Notably an offset of the actual pose from a target pose may be determined. The actual pose or the offset can be taken into account during operation of the rotating head system 110, in order to enable the rotating head system 110 to operate in a precise and collision-free manner.

It can be shown that for relatively small translations, the (translational) offset of the pose can be described as

$$\begin{bmatrix} \Delta x \\ \Delta y \\ \Delta z \end{bmatrix} = \begin{bmatrix} 1 \\ 0 \\ 0 \end{bmatrix} \Delta x + \begin{bmatrix} 0 \\ 1 \\ 0 \end{bmatrix} \Delta y + \begin{bmatrix} 0 \\ 0 \\ 1 \end{bmatrix} \Delta z$$

wherein the partial deviations may be given by

$$\frac{\partial f}{\partial x} = \begin{bmatrix} 1 \\ 0 \\ 0 \end{bmatrix}, \ \frac{\partial f}{\partial y} = \begin{bmatrix} 0 \\ 1 \\ 0 \end{bmatrix}, \ \frac{\partial f}{\partial z} = \begin{bmatrix} 0 \\ 0 \\ 1 \end{bmatrix}.$$

In a similar manner, the (rotational) offset of the pose for a relatively small rotation may be given by

$$\Delta_{rot} = \frac{\partial}{\partial rx} \cdot \Delta rx + \frac{\partial}{\partial ry} \cdot \Delta ry + \frac{\partial}{\partial rz} \cdot \Delta rz$$

$$= \left( \begin{bmatrix} 1 \\ 0 \\ 0 \end{bmatrix} \times \begin{bmatrix} x \\ y \\ z \end{bmatrix} \right) \Delta rx + \left( \begin{bmatrix} 0 \\ 1 \\ 0 \end{bmatrix} \times \begin{bmatrix} x \\ y \\ z \end{bmatrix} \right) \Delta ry + \left( \begin{bmatrix} 0 \\ 0 \\ 1 \end{bmatrix} \times \begin{bmatrix} x \\ y \\ z \end{bmatrix} \right) \Delta rz$$

wherein $\times$ denotes the cross-product operation, and wherein the vector $[x, y, z]^T$ denotes the position of a camera 201, 202, 203, 204.

A camera 201, 202, 203, 204 is typically only configured to capture image data on a two-dimensional (2D) plane. The orientation of the 2D plane of a camera 201, 202, 203, 204 within a 3D coordinate system can be described by the orientation of the two axis which span the 2D plane. The orientation of the first axis may be given by a first orientation vector $\begin{bmatrix} V_{1x} \\ V_{1y} \\ V_{1z} \end{bmatrix}$ and the orientation of the second axis may be given by a second orientation vector $\begin{bmatrix} V_{2x} \\ V_{2y} \\ V_{2z} \end{bmatrix}$.

For each camera 201, 202, 203, 204, a first Jacobian component or row vector (i.e. a 1 $\times$ 6 vector) for the first axis of the 2D plane of the camera 201, 202, 203, 204, 204 can be calculated as

$$\frac{\partial}{\partial x} = \begin{bmatrix} 1 \\ 0 \\ 0 \end{bmatrix} \circ \begin{bmatrix} V_{1x} \\ V_{1y} \\ V_{1z} \end{bmatrix}, \frac{\partial}{\partial y} = \begin{bmatrix} 0 \\ 1 \\ 0 \end{bmatrix} \circ \begin{bmatrix} V_{1x} \\ V_{1y} \\ V_{1z} \end{bmatrix}, \frac{\partial}{\partial z} = \begin{bmatrix} 0 \\ 0 \\ 1 \end{bmatrix} \circ \begin{bmatrix} V_{1x} \\ V_{1y} \\ V_{1z} \end{bmatrix},$$

$$\frac{\partial}{\partial rx} = \left( \begin{bmatrix} 1 \\ 0 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \frac{\partial}{\partial ry} = \left( \begin{bmatrix} 0 \\ 1 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \frac{\partial}{\partial rz} = \left( \begin{bmatrix} 0 \\ 0 \\ 1 \end{bmatrix} \times \begin{bmatrix} x \\ y \\ z \end{bmatrix} \right) \circ \begin{bmatrix} V_{1x} \\ V_{1y} \\ V_{1z} \end{bmatrix},$$

and a second Jacobian component or row vector for the second axis of the 2D plane of the camera 201, 202, 203, 204, 204 can be calculated as

$$\frac{\partial}{\partial x} = \begin{bmatrix} 1 \\ 0 \\ 0 \end{bmatrix} \circ \begin{bmatrix} V_{2x} \\ V_{2y} \\ V_{2z} \end{bmatrix}, \frac{\partial}{\partial y} = \begin{bmatrix} 0 \\ 1 \\ 0 \end{bmatrix} \circ \begin{bmatrix} V_{2x} \\ V_{2y} \\ V_{2z} \end{bmatrix}, \frac{\partial}{\partial z} = \begin{bmatrix} 0 \\ 0 \\ 1 \end{bmatrix} \circ \begin{bmatrix} V_{2x} \\ V_{2y} \\ V_{2z} \end{bmatrix},$$

$$\frac{\partial}{\partial rx} = \left( \begin{bmatrix} 1 \\ 0 \\ 0 \end{bmatrix} \times \begin{bmatrix} x \\ y \\ z \end{bmatrix} \right) \circ \begin{bmatrix} V_{2x} \\ V_{2y} \\ V_{2z} \end{bmatrix}, \frac{\partial}{\partial ry} = \left( \begin{bmatrix} 0 \\ 1 \\ 0 \end{bmatrix} \times \begin{bmatrix} x \\ y \\ z \end{bmatrix} \right) \circ \begin{bmatrix} V_{2x} \\ V_{2y} \\ V_{2z} \end{bmatrix}, \frac{\partial}{\partial rz} = \left( \begin{bmatrix} 0 \\ 0 \\ 1 \end{bmatrix} \times \begin{bmatrix} x \\ y \\ z \end{bmatrix} \right) \circ \begin{bmatrix} V_{2x} \\ V_{2y} \\ V_{2z} \end{bmatrix},$$

wherein $\circ$ is the projection operator.

Using the above mentioned formula, a Jacobian matrix $J$ may be determined by regrouping the Jacobian components or row vectors of the $K$ cameras 201, 202, 203, 204 into a 6 $\times$ 2$K$ matrix. The Jacobian matrix $J$ may be inversed using a known inversion method to provide a (pseudo) inverse matrix $J^{-1}$. The pose offset $P = [\Delta x, \Delta y, \Delta z, \Delta rx, \Delta ry, \Delta rz]^T$ between the target pose and the actual pose of the head 111 or the rotation point 121 may then be determined as

$$P = J^{-1}[DEV].$$

The (pseudo) inverse matrix $J^{-1}$ for a particular setup of cameras 201, 202, 203, 204 may be determined in advance.

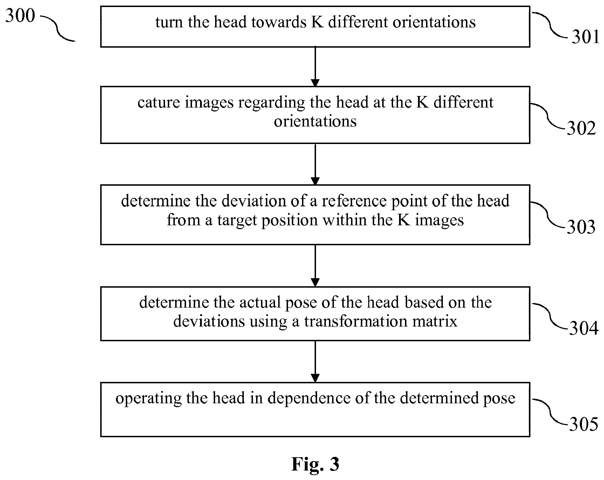

Fig. 3 shows a flow chart of an example method 300 for operating a rotating head system 110, wherein the rotating head system 110 comprises a head 111 which is configured to be rotated around a rotation point 121. The head 111 may be used for welding studs 131 onto the bodies 101 of products 100 (notably vehicles) which are manufactured on an assembly line. The method 300 may comprise a calibration phase, during which an offset of the actual pose of the rotation point 121 or the head 111 from a target pose is determined. The offset may be used subsequently during operation of the rotating head system 110, in order to allow for a precise and collision-free operation of the rotating head system 110.

The method 300 comprises rotating 301 the head 111 into $K$ different orientations 211, 212, 213, 214 (notably orientation angles 231, 232, 233, 234) to face $K$ different cameras 201, 202, 203, 204, respectively, with $K > 3$ (notably $K = 4$). The head 111 may comprise one or more tools at the front face of the head 111 (e.g. a welding tool and/or a grabbing device). The head 111 may be rotated 301 around the rotation point 121 such that the front face of the head 111 faces in a sequential manner the $K$ different cameras 201, 202, 203, 204.

Furthermore, the method 300 comprises capturing 302 $K$ images using the $K$ different cameras 201, 202, 203, 204, respectively. The $K$ images may be captured sequentially as the head 111 is rotated into the $K$ different orientations 211, 212, 213, 214, such that each image is indicative of the front face of the head 111. If the head 111 is positioned correctly with respect to the product 100, the front face of the head 111, notably a reference point 112 on the front face of the head 111, should be located at a target position 211 within each one of the $K$ images. However, an offset of the actual pose of the head 111 (or rotation point 121) from the target pose of the head 111 (or rotation point 121) typically leads to a deviation of the reference point 112 from the target position 211 in at least one of the $K$ images.

The method 300 further comprises determining 303 $K$ deviations of the reference point 112 of the head 111 from the target position 211 within the $K$ images, respectively. Hence, $K$ deviation values or deviation vectors may be determined. The method 300 may comprise determining 304 an offset of the actual pose of the head 111 from the target pose based on the $K$ deviations using a transformation matrix (notably using an estimate of an inverse of a Jacobian matrix which describes the measurement setup for measuring the $K$ deviations). The offset may describe the translational and/or rotational offset of the actual pose of the head 111 from the target pose.

In addition, the method 300 may comprise operating 305 the head 111 for manufacturing products 100, in dependence of the offset. In particular, a welding process which is performed by the rotating head system 110 may be performed in dependence of the offset which has been determined during calibration. By doing this, a precise and collision-free operation of the rotating head system 110 may be ensured.

It should be noted that the description and drawings merely illustrate the principles of the proposed methods and systems. Those skilled in the art will be able to implement various arrangements that, although not explicitly described or shown herein, embody the principles of the invention. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1.  A method (300) for operating a rotating head system (110), wherein the rotating head system (110) comprises a head (111) which is configured to be rotated around a rotation point (121); wherein the method (300) comprises,

    - rotating (301) the head (111) around the rotation point (121) into $K$ different orientations (211, 212, 213, 214) such that a front face of the head (111) faces $K$ different cameras (201, 202, 203, 204), respectively, with $K > 3$, which are arranged at $K$ different angles (231, 232, 233, 234) around the rotation point (121), respectively;
    - capturing (302) $K$ images using the $K$ different cameras (201, 202, 203, 204), respectively;
    - determining (303) $K$ deviations of the reference point (112) on the front face of the head (111) from the target position (211) within the $K$ images, respectively;
    - determining (304) an offset of an actual pose of the head (111) from the target pose based on the $K$ deviations using a pre-determined transformation matrix; and
    - operating (305) the head (111) in dependence of the offset;

    **characterized by** the steps:

    - determining a deviation vector indicative of the K deviations of the reference point (112) of the head (111)

from the target position (211); and
- multiplying the deviation vector with the transformation matrix to determine an offset vector, wherein the offset vector is indicative of a translational offset and/or a rotational offset of an actual pose of the head (111) from the target pose.

2. The method (300) of claim 1, wherein the transformation matrix comprises a Jacobian matrix or an estimate of an inverse of a Jacobian matrix.

3. The method (300) of any previous claim, wherein

- the deviation of the reference point (112) of the head (111) from the target position (211) within a particular image of the $K$ images comprises a first deviation component (221) along a first axis of the particular image and a second deviation component (222) along a second axis of the particular image; and
- the deviation vector comprises as vector elements the first deviation components (221) and the second deviation components (222) for the $K$ deviations.

4. The method of claim 3, wherein

- the transformation matrix is an inverse of a Jacobian matrix; and
- the Jacobian matrix comprises a row vector for each vector element of the deviation vector.

5. The method of claim 4, wherein

- the row vector of the Jacobian matrix for the first deviation component (221) along the first axis of the particular image comprises the vector elements

$$\frac{\partial}{\partial x} = \begin{bmatrix} 1 \\ 0 \\ 0 \end{bmatrix} \circ \begin{bmatrix} V_{1x} \\ V_{1y} \\ V_{1z} \end{bmatrix}, \quad \frac{\partial}{\partial y} = \begin{bmatrix} 0 \\ 1 \\ 0 \end{bmatrix} \circ \begin{bmatrix} V_{1x} \\ V_{1y} \\ V_{1z} \end{bmatrix}, \quad \frac{\partial}{\partial z} = \begin{bmatrix} 0 \\ 0 \\ 1 \end{bmatrix} \circ \begin{bmatrix} V_{1x} \\ V_{1y} \\ V_{1z} \end{bmatrix},$$

$$\frac{\partial}{\partial rx} = \left( \begin{bmatrix} 1 \\ 0 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \quad \frac{\partial}{\partial ry} = \left( \begin{bmatrix} 0 \\ 1 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \quad \frac{\partial}{\partial rz} = \left( \begin{bmatrix} 0 \\ 0 \\ 1 \end{bmatrix} \times \begin{bmatrix} x \\ y \\ z \end{bmatrix} \right) \circ \begin{bmatrix} V_{1x} \\ V_{1y} \\ V_{1z} \end{bmatrix},$$

- $\begin{bmatrix} V_{1x} \\ V_{1y} \\ V_{1z} \end{bmatrix}$ is indicative of an orientation of the fist axis of the particular image;

- $\begin{bmatrix} x \\ y \\ z \end{bmatrix}$ is indicative of a position of a particular camera of the $K$ different cameras (201, 202, 203, 204), which has taken the particular image; and
- $\circ$ is the projection operator.

6. The method (300) of any previous claim, wherein operating (305) the head (111) comprises welding one or more studs (131) to the product (100) using the head (111) of the rotating head system (110).

7. The method (300) of any previous claim, wherein

- the head (111) comprises a grabbing device for grabbing a stud (131); and
- the reference point (112) is located on the grabbing device.

8. The method (300) of any previous claim, wherein the $K$ different angles span an angular range of 45° or more.

**9.** The method (300) of any previous claim, wherein the transformation matrix comprises a Jacobian matrix or an estimate of an inverse of a Jacobian matrix, wherein the Jacobian matrix only depends on the *K* different orientations (211, 212, 213, 214) and the positions of the *K* different cameras (201, 202, 203, 204).

**10.** A system for operating a rotating head system (110), the system comprising:

- a rotating head system (110) which comprises a head (111) that may be rotated around a rotation point (121) and which is configured to attach a part (131) onto a body (101) of a product (100) using the head (111),
- K different cameras (201, 202, 203, 204), with K > 3, which are arranged at K different angles (231, 232, 233, 234) around the rotation point (121), respectively, and
- a control unit (150) for controlling the rotating head system (110),

wherein the control unit (150) is configured to carry out the method according to claim 1.

**Patentansprüche**

**1.** Verfahren (300) zum Betreiben eines rotierenden Kopfsystems (110), wobei das rotierende Kopfsystem (110) einen Kopf (111) umfasst, der dazu ausgelegt ist, um einen Drehpunkt (121) gedreht zu werden; wobei das Verfahren (300) Folgendes umfasst:

- Drehen (301) des Kopfes (111) um den Drehpunkt (121) in *K* verschiedene Ausrichtungen (211, 212, 213, 214), sodass eine Vorderseite des Kopfes (111) zu *K* verschiedenen Kameras (201, 202, 203, 204), mit *K* > 3, hin weist, die in *K* verschiedenen Winkeln (231, 232, 233, 234) um den Drehpunkt (121) angeordnet sind;
- Aufnehmen (302) von *K* Bildern unter Verwendung der *K* verschiedenen Kameras (201, 202, 203, 204);
- Bestimmen (303) von *K* Abweichungen des Bezugspunktes (112) auf der Vorderseite des Kopfes (111) von der Sollposition (211) innerhalb der *K* Bilder;
- Bestimmen (304) eines Versatzes einer Istpose des Kopfes (111) von der Sollpose basierend auf den *K* Abweichungen unter Verwendung einer vorbestimmten Transformationsmatrix; und
- Betreiben (305) des Kopfes (111) in Abhängigkeit von dem Versatz;

**gekennzeichnet durch** die folgenden Schritte:

- Bestimmen eines Abweichungsvektors, der die *K* Abweichungen des Bezugspunktes (112) des Kopfes (111) von der Sollposition (211) angibt; und
- Multiplizieren des Abweichungsvektors mit der Transformationsmatrix, um einen Versatzvektor zu bestimmen, wobei der Versatzvektor einen Translationsversatz und/oder einen Rotationsversatz einer Istpose des Kopfes (111) von der Sollpose angibt.

**2.** Verfahren (300) gemäß Anspruch 1, wobei die Transformationsmatrix eine Jacobimatrix oder eine Schätzung der Inversen einer Jacobimatrix umfasst.

**3.** Verfahren (300) gemäß einem der vorhergehenden Ansprüche, wobei

- die Abweichung des Bezugspunktes (112) des Kopfes (111) von der Sollposition (211) innerhalb eines bestimmten Bildes der *K* Bilder eine erste Abweichungskomponente (221) entlang einer ersten Achse des bestimmten Bildes und eine zweite Abweichungskomponente (222) entlang einer zweiten Achse des bestimmten Bildes umfasst; und
- der Abweichungsvektor als Vektorelemente die ersten Abweichungskomponenten (221) und die zweiten Abweichungskomponenten (222) für die *K* Abweichungen umfasst.

**4.** Verfahren gemäß Anspruch 3, wobei

- die Transformationsmatrix eine Inverse einer Jacobimatrix ist; und
- die Jacobimatrix einen Zeilenvektor für jedes Vektorelement des Abweichungsvektors umfasst.

**5.** Verfahren gemäß Anspruch 4, wobei

- der Zeilenvektor der Jacobimatrix für die erste Abweichungskomponente (221) entlang der ersten Achse des bestimmten Bildes die Vektorelemente

$$\frac{\partial}{\partial x} = \begin{bmatrix}1\\0\\0\end{bmatrix} \circ \begin{bmatrix}V_{1x}\\V_{1y}\\V_{1z}\end{bmatrix}, \quad \frac{\partial}{\partial y} = \begin{bmatrix}0\\1\\0\end{bmatrix} \circ \begin{bmatrix}V_{1x}\\V_{1y}\\V_{1z}\end{bmatrix}, \quad \frac{\partial}{\partial x} = \begin{bmatrix}0\\0\\1\end{bmatrix} \circ \begin{bmatrix}V_{1x}\\V_{1y}\\V_{1z}\end{bmatrix}$$

$$\frac{\partial}{\partial rx} = \left(\begin{bmatrix}1\\0\\0\end{bmatrix} \times \begin{bmatrix}x\\y\\z\end{bmatrix}\right) \circ \begin{bmatrix}V_{1x}\\V_{1y}\\V_{1z}\end{bmatrix}, \quad \frac{\partial}{\partial ry} = \left(\begin{bmatrix}0\\1\\0\end{bmatrix} \times \begin{bmatrix}x\\y\\z\end{bmatrix}\right) \circ \begin{bmatrix}V_{1x}\\V_{1y}\\V_{1z}\end{bmatrix}, \quad \frac{\partial}{\partial rz} = \left(\begin{bmatrix}0\\0\\1\end{bmatrix} \times \begin{bmatrix}x\\y\\z\end{bmatrix}\right) \circ \begin{bmatrix}V_{1x}\\V_{1y}\\V_{1z}\end{bmatrix}$$

 umfasst, wobei

- $\begin{bmatrix}V_{1x}\\V_{1y}\\V_{1z}\end{bmatrix}$ für die Ausrichtung der ersten Achse des bestimmten Bildes steht;

- $\begin{bmatrix}x\\y\\z\end{bmatrix}$ für eine Position einer bestimmten Kamera der $K$ verschiedenen Kameras (201, 202, 203, 204) steht, die das bestimmte Bild aufgenommen hat; und

- ° der Projektionsoperator ist.

6. Verfahren (300) gemäß einem der vorhergehenden Ansprüche, wobei das Betreiben (305) des Kopfes (111) das Anschweißen eines oder mehrerer Bolzen (131) an das Produkt (100) unter Verwendung des Kopfes (111) des rotierenden Kopfsystems (110) umfasst.

7. Verfahren (300) gemäß einem der vorhergehenden Ansprüche, wobei

- der Kopf (111) eine Greifvorrichtung zum Greifen eines Bolzens (131) aufweist; und
- der Bezugspunkt (112) sich an der Greifvorrichtung befindet.

8. Verfahren (300) gemäß einem der vorhergehenden Ansprüche, wobei die $K$ verschiedenen Winkel einen Winkelbereich von 45° oder mehr umfassen.

9. Verfahren (300) gemäß einem der vorhergehenden Ansprüche, wobei die Transformationsmatrix eine Jacobimatrix oder eine Schätzung einer Inversen einer Jacobimatrix umfasst, wobei die Jacobimatrix nur von den $K$ verschiedenen Ausrichtungen (211, 212, 213, 214) und den Positionen der $K$ verschiedenen Kameras (201, 202, 203, 204) abhängt.

10. System zum Betreiben eines rotierenden Kopfsystems (110), wobei das System Folgendes umfasst:

- ein rotierendes Kopfsystem (110), das einen Kopf (111) umfasst, der um einen Drehpunkt (121) gedreht werden kann und der dazu ausgelegt ist, ein Teil (131) an einem Körper (101) eines Produkts (100) unter Verwendung des Kopfes (111) zu befestigen,
- K verschiedene Kameras (201, 202, 203, 204), mit K > 3, die jeweils in K verschiedenen Winkeln (231, 232, 233, 234) um den Drehpunkt (121) angeordnet sind, und
- eine Steuereinheit (150) zum Steuern des rotierenden Kopfsystems (110), wobei die Steuereinheit (150) dazu ausgelegt ist, das Verfahren gemäß Anspruch 1 durchzuführen.

**Revendications**

1. Procédé (300) pour faire fonctionner un système de tête rotative (110), le système de tête rotative (110) comprenant une tête (111) qui est configurée pour être mise en rotation autour d'un point de rotation (121) ; le procédé (300) comprenant,

- la mise en rotation (301) de la tête (111) autour du point de rotation (121) dans *K* orientations différentes (211, 212, 213, 214) de telle sorte qu'une face avant de la tête (111) fasse face à *K* caméras différentes (201, 202, 203, 204), respectivement, avec *K* > 3, qui sont agencées à *K* angles différents (231, 232, 233, 234) autour du point de rotation (121), respectivement ;
- la capture (302) de *K* images à l'aide des *K* caméras différentes (201, 202, 203, 204), respectivement ;
- la détermination (303) de *K* déviations du point de référence (112) sur la face avant de la tête (111) par rapport à la position cible (211) au sein des *K* images, respectivement ;
- la détermination (304) d'un décalage d'une pose réelle de la tête (111) par rapport à la pose cible sur la base des *K* déviations à l'aide d'une matrice de transformation prédéterminée ; et
- le fait de faire fonctionner (305) la tête (111) en fonction du décalage ;

**caractérisé par** les étapes consistant à :

- déterminer un vecteur de déviation indiquant les K déviations du point de référence (112) de la tête (111) par rapport à la position cible (211) ; et
- multiplier le vecteur de déviation par la matrice de transformation pour déterminer un vecteur de décalage, le vecteur de décalage indiquant un décalage de translation et/ou un décalage de rotation d'une pose réelle de la tête (111) par rapport à la pose cible.

2. Procédé (300) selon la revendication 1, dans lequel la matrice de transformation comprend une matrice jacobienne ou une estimation d'un inverse d'une matrice jacobienne.

3. Procédé (300) selon l'une quelconque des revendications précédentes, dans lequel

- la déviation du point de référence (112) de la tête (111) par rapport à la position cible (211) au sein d'une image particulière des *K* images comprend un premier composant de déviation (221) le long d'un premier axe de l'image donnée et un deuxième composant de déviation (222) le long d'un deuxième axe de l'image donnée ; et
- le vecteur de déviation comprend en tant qu'éléments vectoriels les premiers composants de déviation (221) et les deuxièmes composants de déviation (222) pour les *K* déviations.

4. Procédé selon la revendication 3, dans lequel

- la matrice de transformation est un inverse d'une matrice jacobienne ; et
- la matrice jacobienne comprend un vecteur de rangée pour chaque élément vectoriel du vecteur de déviation.

5. Procédé selon la revendication 4, dans lequel

- le vecteur de rangée de la matrice jacobienne pour le premier composant de déviation (221) le long du premier axe de l'image donnée comprend les éléments vectoriels

$$\frac{\partial}{\partial x} = \begin{bmatrix} 1 \\ 0 \\ 0 \end{bmatrix} \circ \begin{bmatrix} V_{1x} \\ V_{1y} \\ V_{1z} \end{bmatrix}, \frac{\partial}{\partial y} = \begin{bmatrix} 0 \\ 1 \\ 0 \end{bmatrix} \circ \begin{bmatrix} V_{1x} \\ V_{1y} \\ V_{1z} \end{bmatrix}, \frac{\partial}{\partial z} = \begin{bmatrix} 0 \\ 0 \\ 1 \end{bmatrix} \circ \begin{bmatrix} V_{1x} \\ V_{1y} \\ V_{1z} \end{bmatrix},$$

$$\frac{\partial}{\partial rx} = \left( \begin{bmatrix} 1 \\ 0 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \frac{\partial}{\partial ry} = \left( \begin{bmatrix} 0 \\ 1 \\ 0 \end{bmatrix} \times \begin{bmatrix} x \\ y \\ z \end{bmatrix} \right) \circ \begin{bmatrix} V_{1x} \\ V_{1y} \\ V_{1z} \end{bmatrix}, \frac{\partial}{\partial rz} = \left( \begin{bmatrix} 0 \\ 0 \\ 1 \end{bmatrix} \times \begin{bmatrix} x \\ y \\ z \end{bmatrix} \right) \circ \begin{bmatrix} V_{1x} \\ V_{1y} \\ V_{1z} \end{bmatrix},$$

- $\begin{bmatrix} V_{1x} \\ V_{1y} \\ V_{1z} \end{bmatrix}$ indique une orientation du premier axe de l'image donnée ;

$$\begin{bmatrix} x \\ y \\ z \end{bmatrix}$$

- indique une position d'une caméra donnée des *K* caméras différentes (201, 202, 203, 204), qui a pris l'image donnée ; et
- ° est l'opérateur de projection.

6. Procédé (300) selon l'une quelconque des revendications précédentes, dans lequel le fait de faire fonctionner (305) la tête (111) comprend le soudage d'un ou de plusieurs goujons (131) au produit (100) à l'aide de la tête (111) du système de tête rotative (110).

7. Procédé (300) selon l'une quelconque des revendications précédentes, dans lequel

- la tête (111) comprend un dispositif de saisie pour saisir un goujon (131) ; et
- le point de référence (112) est situé sur le dispositif de saisie.

8. Procédé (300) selon l'une quelconque des revendications précédentes, dans lequel les *K* angles différents s'étendent sur une plage angulaire de 45° ou plus.

9. Procédé (300) selon l'une quelconque des revendications précédentes, dans lequel la matrice de transformation comprend une matrice jacobienne ou une estimation d'un inverse d'une matrice jacobienne, la matrice jacobienne dépendant uniquement des *K* orientations différentes (211, 212, 213, 214) et des positions des *K* caméras différentes (201, 202, 203, 204) .

10. Système pour faire fonctionner un système de tête rotative (110), le système comprenant :

- un système de tête rotative (110) qui comprend une tête (111) qui peut être mise en rotation autour d'un point de rotation (121) et qui est configurée pour fixer une partie (131) sur un corps (101) d'un produit (100) à l'aide de la tête (111),
- K caméras différentes (201, 202, 203, 204), avec K > 3, qui sont agencées à K angles différents (231, 232, 233, 234) autour du point de rotation (121), respectivement, et
- une unité de commande (150) pour commander le système de tête rotative (110), l'unité de commande (150) étant configurée pour mettre en œuvre le procédé selon la revendication 1.

**Fig. 1a**

**Fig. 1b**

**Fig. 1c**

**Fig. 2a**

**Fig. 2b**

300 ⌐

| turn the head towards K different orientations | ⌐301 |

↓

| cature images regarding the head at the K different orientations | ⌐302 |

↓

| determine the deviation of a reference point of the head from a target position within the K images | ⌐303 |

↓

| determine the actual pose of the head based on the deviations using a transformation matrix | ⌐304 |

↓

| operating the head in dependence of the determined pose | ⌐305 |

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019084160 A1
- US 2005273202 A1
- EP 1345099 A2
- US 2019047151 A1